# EUROPEAN PATENT SPECIFICATION

(11) **EP 0 442 214 B1**
(45) Date of publication and mention of the grant of the patent: **03.02.1999**
(21) Application number: 90313691.9
(22) Date of filing: 14.12.1990
(51) Int. Cl.: G11B 5/31

(54) **A method of manufacturing thin film magnetic heads**
Herstellungsverfahren für Dünnfilm-Magnetköpfe
Procédé de fabrication de têtes magnétiques à films minces

(30) Priority: 15.02.1990 US 480558
(43) Date of publication of application: 21.08.1991
(73) Proprietor: SEAGATE TECHNOLOGY INTERNATIONAL, Georgetown, Grand Cayman Island (KY)
(72) Inventor: Cohen, Uri, Palo Alto, California 94303 (US); Amin, Nurul, Burnsville, Minnesota 55337 (US)
(74) Representative: Kenyon, Sarah Elizabeth

(56) References cited:
- EP-A- 0 442 212
- EP-A- 0 442 213
- US-A- 4 436 593
- US-A- 4 791 719
- IBM TECHNICAL DISCLOSURE BULLETIN. vol. 24, no. 3, August 1981, ARMONK NEW YORK US page 1470 R.A. GARDNER ET AL. 'MANUFACTURE OF THIN FILM MAGNETIC HEAD'
- PATENT ABSTRACTS OF JAPAN vol. 13, no. 375 (P-921)(3723) 21 August 1989 & JP-A-1 128 212 ( SUMITOMO METAL IND. LTD. ) 19 May 1989
- "Nickel Teil B- Lieferung 2", Gmelins Handbuch der anorganischen Chemie, System-Nummer 57, 1996, Verlag Chemie GmbH- Weinheim/Bergstr., p.952
- "Lagerstoffe bis Milch", Ullmann Encyclopädie der technischen Chemie, 4. Auflage, Band 16, 1978, Verlag Chemie - Weinheim - New York, p.380-381

## Description

This invention relates to methods of manufacturing thin film magnetic heads.

Thin film magnetic read/write heads are used for magnetically reading and writing information upon a magnetic storage medium such as a magnetic disk or magnetic tape. It is highly desirable to provide a high density of information storage on the magnetic storage medium.

Increased storage density in a recording system may be achieved by providing an areal density as high as possible for a given recording surface. In the case of rotating disk drives (both floppy and hard disk), the areal density is found by multiplying the number of flux reversals per unit length along the track (linear density in units of flux reversals per unit length (e.g. inch)) by the number of tracks available per unit length in the radial direction (track density in units of tracks per unit length (e.g. inch)).

The demand for increased storage density in magnetic storage media has lead to reduced magnetic head dimensions. Magnetic heads are now fabricated in a manner similar to that used for semi-conductor integrated circuits in the electronics industry.

During fabrication, many thin film magnetic heads are deposited across the entire surface of a wafer (or substrate). After the layers are deposited, the wafer is "diced" or sliced into many individual thin film heads, each carried by a portion of the wafer so that an upper pole tip, a lower pole tip, and a gap are exposed. The pole tips and the gap (and the portion of the substrate which underlies them) are then lapped in a direction generally inwards, toward the centre of the thin film magnetic head, to achieve the desired dimensions. This lapping process is a grinding process in which the exposed portion of the upper and lower pole tips and the gap are applied to an abrasive, such as a diamond slurry. Electrical contacts are connected to conductive coils. The completed head is next attached to a carrying fixture for use in reading and writing data on a magnetic storage medium such as a computer disk.

In operation, a magnetic storage medium is placed near the exposed upper and lower pole tips. During a read operation, the changing magnetic flux of the moving storage medium impresses a changing magnetic flux upon upper and lower pole tips. This magnetic flux is carried through the pole tips and yoke core around the conductive coil. The changing magnetic flux induces an electrical voltage across the conductive coil which may be detected using electrical detection circuitry. The electrical voltage is representative of the changing magnetic flux produced by the moving magnetic storage medium.

During a write operation, an electrical current is caused to flow in the conductive coil. This electric current induces a magnetic field in top and bottom magnetic poles and causes a magnetic field across the gap between the upper and lower pole tips. A fringe field extends in the vicinity beyond the boundary of the pole tips and into the nearby magnetic storage medium. This fringe field may be used to impress magnetic fields upon the magnetic storage medium and write information.

There are two methods used to fabricate thin film magnetic heads, either additive or subtractive. The additive approach is the dominant approach and involves a series of processing steps in which the various layers of the thin film magnetic head are deposited upon a wafer substrate. The highest track density achievable is strongly influenced by the accuracy of alignment of upper and lower pole tips and their width. Magnetic pole tips typically have a pole thickness in the range of about 1 micron to about 5 microns depending upon the design criteria, i.e. a thicker pole for better over-writing efficiency and a thinner pole for increased resolution capability during the read back operation. The physical shape of upper and lower pole tips and gaps significantly affect the reading and writing performance of the thin film magnetic head by altering the shape of the magnetic fringe field.

As track density increases, currently approaching and exceeding 945 tracks per cm (2400 tracks per inch), the alignment between the upper and lower pole tips in thin film magnetic read/write heads has become critical. At such a high storage density, design criteria require magnetic transducers in which the lower pole tip width is very nearly the same as the upper pole tip width. Upper and lower pole tips should also be in close alignment. At these small dimensions, alignment between the pole tips becomes critical, particularly as dimensions of the pole tips approach the tolerance and definition limits of the deposition techniques. A technique which provides better pole alignment begins with an upper pole, lower pole and a gap area separating the upper and lower poles, all fabricated substantially wider than desired. A narrower mask layer is then deposited upon the upper pole. The structure is then aligned using a material removal process ("milling") such as ion milling or reactive ion milling in which high energy ions bombard the pole tip region to remove the excess material (upper pole, lower pole and gap material) that extends beyond the edges of the mask layer. The mask layer protects only a portion of the upper pole, lower pole and gap so that the width of the completed pole tips is approximately the same as the width of the mask layer.

Examples of this technique are disclosed in US Patent Number 4,791,179, EP-A-0 442 213 and European Patent Application Number EP-A-0 383 739. This latter publication falls within the terms of A 54(3) EPC.

This alignment technique suffers from a number of drawbacks. The mask layer is difficult to remove from the pole tip structure following the milling process. To ensure adequate protection of the pole tips during milling, the mask must be very thick to withstand the milling process. A thick mask, however, decreases the maximum attainable resolution. Furthermore, if the remaining mask material is stripped away following milling, the delicate structure of the thin film magnetic head may be damaged. If, on the other hand, the mask layer is made thinner to improve resolution and facilitate removal of the mask following ion milling, the risk of damaging the pole tip structure during milling is increased.

According to one aspect of the present invention there is provided a method of manufacturing a thin film magnetic head on a substrate comprising: depositing a magnetic bottom pole upon the substrate; depositing a material for providing a magnetic gap upon the magnetic bottom pole; and depositing a magnetic upper pole upon the material; characterised by: plating upon the magnetic upper pole a metallic sacrificial mask which is chemically distinct from the magnetic upper pole such that it can be selectively etched; wherein the magnetic upper pole and the sacrificial mask are deposited through a photoresist mask.

The present invention seeks to provide closely aligned pole tips in a thin film magnetic transducer thereby allowing increased data storage densities. In the present invention, only the bottom pole layer and the gap layer are trimmed into alignment with the upper pole layer. During ion milling or dry etching of the bottom pole layer and/or the gap layer, a top pole tip is protected by a sufficiently thick sacrificial metal mask layer which is designed to be easily applied and selectively removed after the milling process. The sacrificial mask is self aligned to the top pole by depositing it through the same photo-resist mask through which the top pole is deposited.

In one embodiment of the present invention, a lower pole with a wider tip than is necessary in the final design is deposited upon a substrate. Next, gap material is deposited upon the lower pole. Coils and insulation are deposited over the lower pole and gap layer. The coils and insulation are confined to the yoke area and do not cover a lower pole tip and gap. Finally, an upper pole layer is deposited on the structure. The upper pole is plated through a photo-resist mask which has a pole tip width defining the track width in the final design. Prior to milling, the pole tips need not be in perfect alignment. However, the top pole is narrower than the bottom pole, and its projection must be completely enclosed by the bottom pole tip. Next, another metal layer is deposited upon the upper pole layer through the same photo-resist mask used to deposit the top pole layer. This metal layer forms the sacrificial mask for the subsequent ion milling. This metal mask may be any metal or alloy other than the material used for magnetic poles, but it must be selectively etchable, so that the magnetic pole material is not attacked. It must also be compatible for deposition upon the magnetic pole layer. In a preferred embodimnent of the present invention, this metal is copper or gold, both of which are already used in the production of thin film heads. Therefore, the geometry of the top pole (and the metal sacrificial mask layer) defines the shape of the bottom pole tip subsequent to milling. Copper is the most preferred metal for reasons of economy, ion milling rates and simplicity.

The metal sacrificial mask layer can be used as a base layer upon which one or more additional sacrificial mask materials are deposited through the same photo-resist mask used to deposit the top pole layer and first sacrificial mask layer. In one embodiment of the present invention, a layer of nickel-iron alloy is deposited upon the metal sacrificial base layer. Nickel-iron is the material typically used for top and bottom pole layers and is therefore easy to integrate into the manufacturing process. Furthermore, because the sacrificial mask nickel-iron layer will have a milling rate equal to the milling rate of the bottom pole tip layer (since they consist of the same material), an adequate thickness of the nickel-iron sacrificial layer is readily deposited.

After the sacrificial mask layer(s) are deposited, the photo-resist mask (through which the top pole and sacrificial mask layer(s) were deposited) is stripped off, the seed layer is removed, the gap material is wet etched or ion milled, and the pole tip structure is exposed to an ion milling process in which high energy ions bombard the surface of the pole tip. The mask protects the areas of the top and bottom pole tips and gap layer directly below the mask from the milling process. Those areas of the bottom pole tip and/or gap layer exposed to the high energy ions are milled away due to the impact force from the ions.

Following the milling process, the top and bottom pole tips and gap layer are in alignment and the excess sacrificial mask layer remains on the upper pole tip. The wafer is next exposed to a selective chemical etch which etches away the metal or alloy sacrificial layer from the upper pole tip but does not attack the nickel-iron poles or gap material, and leaves the thin film head structure intact. In a multiple layer sacrificial mask, should any excess nickel-iron sacrificial layer remain on the first metal sacrificial layer, it is removed through "lift-off" in which the underlying metal layer (such as copper) is selectively etched away from below by the action of the chemical etch and the remains of the nickel-iron sacrificial layer falls away.

In another embodiment of the present invention a cured photo-resist top sacrificial layer is deposited using standard photo-lithographic and masking techniques. The photo-resist layer is used in place of the sacrificial nickel-iron layer. Photoresist is presently used in the manufacture of thin film magnetic heads and a photo-resist sacrificial layer therefore is easy to implement in present day manufacturing processes. Following the processes of ion milling, the photo-resist is stripped by a photo-resist stripper and the copper layer is removed with a copper etch as described above. Any excess sacrificial mask photo-resist which remains on the copper layer is removed by "lift off".

A multi-metal layer sacrificial mask is advantageous because a different colour second metal layer facilitates end point detection (i.e. when the milling of the nickel-iron is complete, the underlying copper coloured mask layer becomes easily visible). The thickness of the nickel-iron second sacrificial layer covering the copper sacrificial layer should be equal to, or slightly less than the thickness of the bottom pole tip. Also, because nickel-iron has a slower milling rate than copper, it helps to reduce the total thickness of the mask.

In our co-pending patent application EP 90 313 690 with the publication No. EP-0 442 213 A2 there is disclosed and claimed the use of a particular profile for the mask and other layers in the thin film transducer to assist the material removal process, while in our co-pending application EP 90 313 691 having the publication No. EP 0 442 214 A2 there is disclosed and claimed the use of a sacrificial mask layer which is coextensive with a second magnetic layer. The use of a sacrificial mask which is chemically distinct from the upper magnetic pole is not claimed there.

The invention is illustrated, merely by way of example, in the accompanying drawings, in which:-
Figure 1 shows a top view of a thin film magnetic read/write head;
Figure 2 is a side cross-sectional view of the head of Figure 1 taken along the line 2-2; and
Figures 3A to 31 illustrate steps of a method according to the present invention for manufacturing a thin film magnetic head.

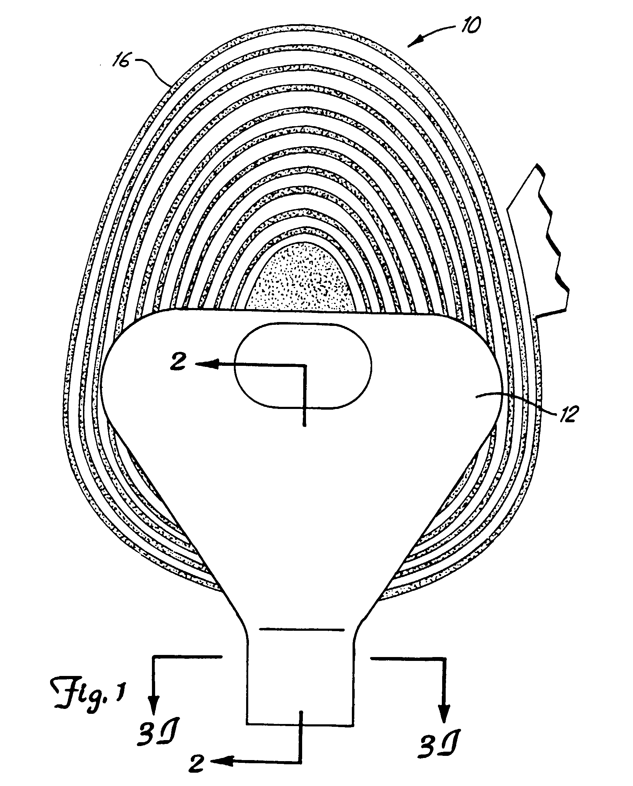

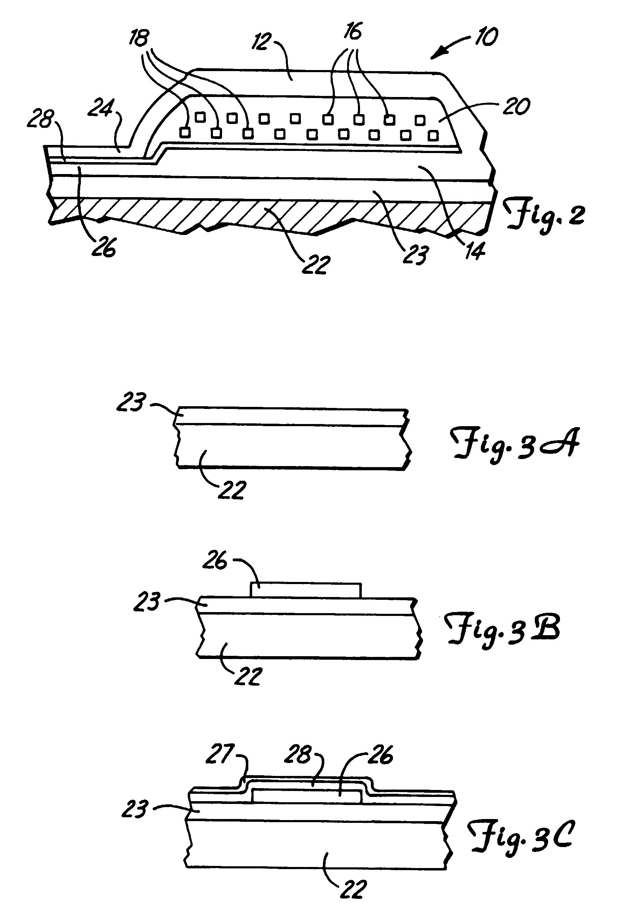

A multi-turn inductive thin film magnetic head 10 is shown schematically in Figures 1 and 2. Figure 1 is a top view of the head 10 and Figure 2 is a side cross-sectional view. The head 10 includes a top pole 12 and a bottom pole 14 of a magnetic thin film core of a nickel-iron alloy. Photo-lithography is used to define the geometry of both the top pole 12 and the bottom pole 14 of the magnetic core. Conductive coils 16, 18 extend between the poles 12, 14 and are electrically insulated therefrom by an insulating layer 20. The head 10 is deposited upon a non-magnetic substrate 22 comprising a ceramic compound such as Al₂O₃-TiC, and an undercoat 23 of Al₂O₃.

In fabricating the head 10, several separate pattern transfer processes are used to deposit the head 10 on the substrate 22 and the undercoat 23. These transfer processes include chemical etching, plating and sputtering. A typical head fabrication process may account for more than a dozen masking levels and more than thirty processing steps.

Figures 3A to 3I show the steps of a method according to the present invention.

Figure 3A shows, in cross section, the substrate 22 and the undercoat 23. The substrate 22 and the undercoat 23 are generally very large relative to the head 10 so that many replicas of the head 10 may be deposited across the entire surface of the substrate 22 and the undercoat 23.

Figure 3B shows the substrate 22 and the undercoat 23 including a lower pole tip 26 of NiFe deposited upon the substrate 22 and the undercoat 23 using photo-lithographic techniques.

The view of Figure 3B shows the width of the lower pole tip 26.

Figure 3C depicts the lower pole tip 26 and includes a layer 28 of gap material which also covers the substrate 22 and a seed layer 27 of nickel-iron. The seed layer 27 is deposited by sputtering and serves as a base layer for electro-deposition. The layer 28 of gap material typically comprises Al₂O₃.

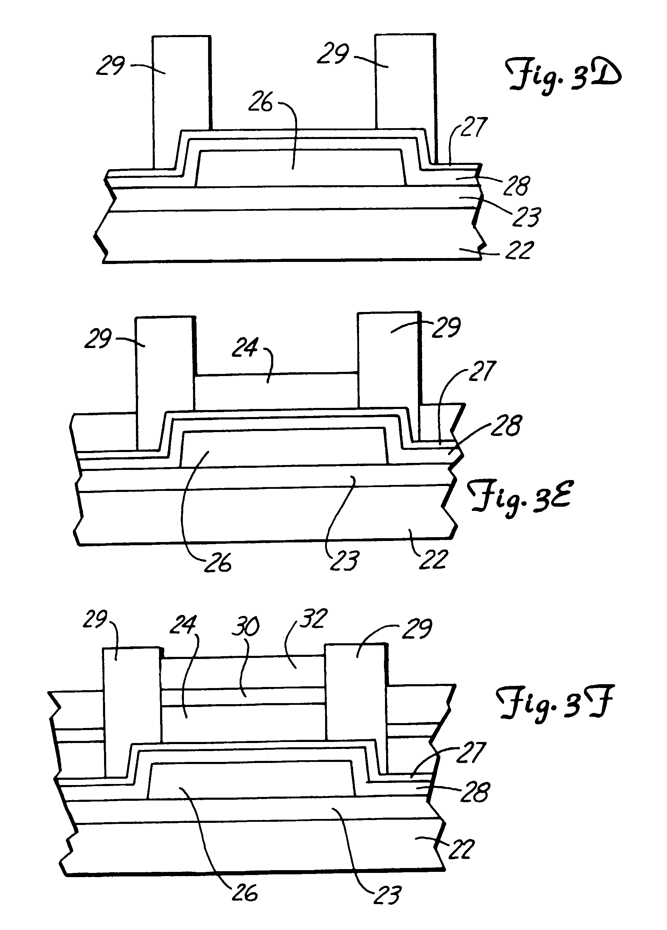

In Figure 3D two photo-resist dams 29 have been deposited upon the layer 28 of gap material and the seed layer 27 whilst leaving uncovered the area where an upper pole tip 24 will be deposited. The photo-resist dams 29 may be deposited using standard photo-lithographic and masking techniques. The upper pole tip 24 of NiFe is then deposited in the area between the photo-resist dams 29 on the exposed portion of the layer 28 of gap material and the seed layer 27 as shown in Figure 3E. Figure 3F shows the pole tip region following deposition of sacrificial mask layers 30, 32. Although two sacrificial mask layers are shown in Figure 3F a single sacrificial mask layer may be used. In a preferred embodiment of the present invention, the sacrificial mask layer 30 comprises a copper layer deposited, for example, by electro-deposition on the upper pole tip 24. The sacrificial mask layer 32 is then deposited on the sacrificial mask layer 30. Other metals or alloys can also be used for the sacrificial masks such as Au, Zn, Cd, In, Pd, Os, Rh and Pt and alloys thereof, but copper and nickel-iron are preferred because they are compatible with thin film magnetic head manufacturing processes.

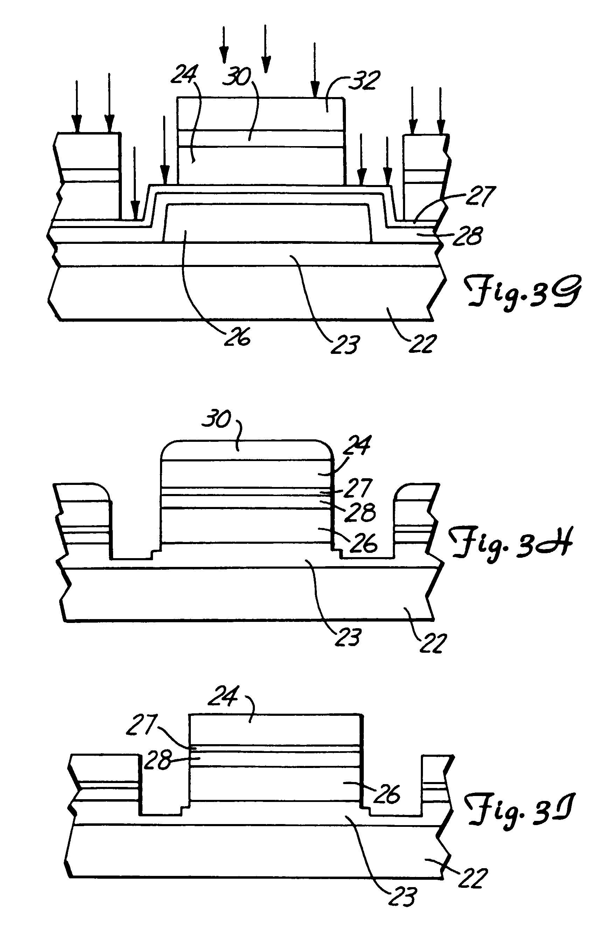

Next, the photo-resist dams 29 are stripped as shown in Figure 3G. In one embodiment, the seed layer 27, under the area of the dams 29, is etched by sputtering or ion milling and the layer 28 of gap material, under the dam area, is chemically etched with dilute hydrofluoric acid (HF), such as 10% by volume (1:10). Alternatively, the seed layer 27 can also be etched chemically. In another embodiment, the seed layer 27, the layer 28 of gap material and the lower pole tip 26 are all ion milled in a single step. The advantage of chemically etching either or both the seed layer 27 and the layer 28 of gap material is to reduce the thickness of the sacrificial mask. Figure 3G illustrates the process of ion milling in which ions are accelerated through a charged grid and bombard the surface of the pole tip structure as shown by the arrows. The high energy ions primarily impact the exposed surface of the layer 28 of gap material, the lower pole tip 26 and the sacrificial mask layer 32.

In a preferred embodiment of the present invention, the sacrificial mask layer 32 comprises a nickel-iron alloy wherein the milling rates thereof and the lower pole tip 26 are substantially equal. The milling conditions may be as follows:-

| | |
|---|---|
| Voltage | 850 volts |
| Background pressure | 2x10⁻⁶ torrs |
| Argon gas pressure | 2x10⁻⁴ torrs |
| Current density | 0.45 mA/cm² |
| Tilt angle | 15° |
| Milling rate of copper | 810 Angstrom/min |
| Milling rate of nickel-iron | 500 Angstrom/min |
| Total Milling Time | 50 minutes |

The lower and upper pole tip thicknesses varies from 2 to 4 microns. The layer 28 of gap material has a thickness which varies between 0.45 and 0.65 microns. EMT 130 by EM Corporation or acetone is used to remove the photo-resist. If the thickness of the pole tips is 2.5 microns and the gap thickness of the layer of gap material is 0.6 microns, the sacrificial mask layers 30, 32 should have a thickness of 2 microns and 2.5 microns respectively.

The sacrificial mask layer 30 of copper was selectively etched using a mixture of Metex Mu-A and Mu-B (2:1) (trade name of MacDermid Company), a copper etchant. The mixture can be diluted with pure water (1:10) to slow the rate of etching.

Figure 3H shows the pole tip structure following the ion milling process in which a residual layer of the sacrificial mask layer 30 remains upon the upper pole tip 24. As shown in Figure 3H, the milling process has removed the non-aligned portions of the lower pole tip 26. Should residue nickel-iron remain from the sacrificial mask layer 32, it is removed using a lift-off process in which the sacrificial mask layer 30 is stripped away using a copper etch, which leaves the pole tip structure shown in Figure 3I. A suitable selective copper etch is Mu-A and Mu-B (2:1) produced by MacDermid Company. Ammonium sulphate (120 g/l) with neutral pH is another suitable copper etchant. Figure 3I is a cross-sectional view of Figure 1 taken along the line 3I-3I.

The layer 28 of gap material may be etched away prior to milling using HF-H₂O (1:10). This should be a short duration etch about (1 to 3 minutes) so that metals in the thin film magnetic head structure, such as nickel-iron, are not damaged. Photo-resist stripper is used to remove the photo-resist.

In another embodiment of the present invention, the top sacrificial mask layer comprises a photo-resist, cured by heat or ultra-violet radiation to induce a negative slope. For example, if the pole tip thickness is 2 microns and the thickness of the layer of gap material is 0.6 microns, the sacrificial mask layers 30, 32 should be 2 microns and 5 to 6 microns, respectively.

In selecting a bottom sacrificial mask layer, e.g. the sacrificial mask layer 32, the following are useful criteria:-
a. The bottom sacrificial mask layer should be different (or chemically distinct) from the underlying magnetic pole layer (nickel-iron).
b. There must be a selective chemical etchant which will not attack the underlying magnetic layer (nickel-iron).
c. The material of the bottom sacrificial mask layer should be compatible with plating through the same photo-resist mask used to plate the top magnetic pole layer.
d. The bath used to plate the bottom sacrificial mask layer should be compatible with the top magnetic layer (nickel-iron) so that there will not be significant or spontaneous reaction.
e. Materials having a slow ion milling rate are desirable.
f. A bottom sacrificial mask layer having a different colour than the underlying layer is useful to facilitate end point detection when the sacrificial mask layer is etched.
g. Materials already available during thin film head fabrication are desirable to minimise complexity.

Criteria for successive sacrificial mask layers include:-
a. The successive sacrificial mask layer(s) e.g. the sacrificial mask layers 30, 32, should be different (or chemically distinct) from the underlying mask layer.
b. The material(s) of the successive sacrificial mask layer(s) should be compatible with plating through the same photo-resist mask used to plate the bottom sacrificial mask layer.
c. The successive sacrificial mask layer(s) should have a compatible plating bath(s) which will not react significantly and spontaneously with the underlying mask layer.
d. Materials having a slow ion milling rate are desirable.
e. A successive sacrificial mask layer having a different colour than the underlying mask layer is useful to facilitate end point detection.
f. Materials already available during thin film head fabrication are desirable to minimize complexity.

In the present invention, a metal or alloy sacrificial mask layer may be used in aligning pole tips of a thin film magnetic head. If a multi-layered mask is used, excess mask material may be removed either selectively with a chemical etchant or with a lift off process in which a lower sacrificial mask layer comprising a metal or alloy is selectively, chemically etched away. The lift off process allows the use of sacrificial layers which would normally be difficult to remove without damage to the magnetic head structure.

## Claims

1. A method of manufacturing a thin film magnetic head on a substrate (22,23) comprising:
depositing a magnetic bottom pole (26) upon the substrate (22,23);
depositing a material (28) for providing a magnetic gap upon the magnetic bottom pole (26); and
depositing a magnetic upper pole (24) upon the material (28); characterised by:
plating upon the magnetic upper pole (24) a metallic sacrificial mask (30) which is chemically distinct from the magnetic upper pole (24) such that it can be selectively etched; wherein the magnetic upper pole (24) and the sacrificial mask (30) are deposited through a photoresist mask (29).

2. A method as claimed in claim 1 wherein the step of depositing said sacrificial mask comprises depositing one or more of Cu,Au,Zn,Sn,Cd,In,Pd,Os,Rh and Pt and alloys thereof.

3. A method as claimed in claims 1 or claim 2, comprising depositing a further sacrificial mask (32) upon the sacrificial mask (30).

4. A method as claimed in claim 3 wherein the step of depositing said further metal sacrificial mask comprises depositing one or more of Ni-Fe, Cu, Au, Zn, Sn, Cd, In, Pd, Os, Rh and Pt and alloys thereof.

5. A method as claimed in claim 3 wherein depositing the further sacrificial mask (32) comprises depositing a photoresist.

6. A method as claimed in claim 5 including curing the photoresist layer to induce a negative slope.

7. A method as claimed in any preceding claim including removing the photoresist mask (29) following depositing the sacrificial mask (30) and/or the further sacrificial mask (32).

8. A method as claimed in claim 7 including the step of removing portions of the magnetic bottom pole (26) not aligned with the upper pole (24) following removing the photoresist mask (29).

9. A method as claimed in claim 8 wherein removing non-aligned portions of the magnetic bottom pole (26) comprises ion milling the magnetic bottom pole (26).

10. A method as claimed in claim 8 or 9 including selectively chemically etching the sacrificial mask (30) following removing non-aligned portions of the magnetic bottom pole (26).

## Patentansprüche

1. Verfahren zur Herstellung eines Dünnfilm-Magnetkopfes auf einem Substrat (22,23), mit den folgenden Schritten:
Abscheiden eines unteren Magnetpols (26) auf dem Substrat (22, 23) ;
Abscheiden eines Materials (28) zur Schaffung eines Magnetspaltes auf dem unteren Magnetpol (26), und
Abscheiden eines oberen Magnetpols (24) auf dem Material (28),
dadurch gekennzeichnet, daß
auf den oberen Magnetpol (24) eine metallische Opfermaske (30) aufplattiert wird, die chemisch von dem oberen Magnetpol (24) verschieden ist, derart, daß sie selektiv geätzt werden kann, wobei der obere Magnetpol (24) und die Opfermaske (30) durch eine Photolack-Maske (22) hindurch abgeschieden werden.

2. Verfahren nach Anspruch 1,
bei dem der Schritt der Abscheidung der Opfermaske die Abscheidung von einem oder mehreren von Cu, Au, Zn, Sn, Cd, In, Pd, Os, Rh und Pt und Legierungen hiervon umfaßt.

3. Verfahren nach Anspruch 1 oder 2,
das die Abscheidung einer weiteren Opfermaske (32) auf die Opfermaske (30) umfaßt.

4. Verfahren nach Anspruch 3,
bei dem der Schritt der Abscheidung der weiteren metallischen Opfermaske die Abscheidung von einem oder mehreren von Ni-Fe, Cu, Au, Zn, Sn, Cd, In, Pd, Os, Rh und Pt und Legierungen hiervon umfaßt.

5. Verfahren nach Anspruch 3,
bei dem die Abscheidung der weiteren Opfermaske (32) die Abscheidung eines Photolackes umfaßt.

6. Verfahren nach Anspruch 5,
das die Härtung der Photolack-Schicht zum Hervorrufen einer negativen Neigung einschließt.

7. Verfahren nach einem der vorhergehenden Ansprüche,
das die Entfernung der Photolack-Maske (29) nach der Abscheidung der Opfermaske (30) und/oder der weiteren Opfermaske (32) einschließt.

8. Verfahren nach Anspruch 7,
das den Schritt der Entfernung von Teilen des unteren Magnetpols (26), die nicht mit dem oberen Pol (24) ausgerichtet sind, nach der Entfernung der Photolack-Maske (29) einschließt.

9. Verfahren nach Anspruch 8,
bei dem die Entfernung nicht miteinander ausgerichteter Teile des unteren Magnetpols (26) das Ionenfräsen des unteren Magnetpols (26) umfaßt.

10. Verfahren nach Anspruch 8 oder 9,
das das selektive chemische Ätzen der Opfermaske (30) nach der Entfernung nicht ausgerichteter Teile des unteren Magnetpols (26) einschließt.

## Revendications

1. Procédé de fabrication d'une tête magnétique à couche mince sur un substrat (22, 23), comprenant :
le dépôt d'un pôle magnétique de fond (26) sur le substrat (22, 23) ;
le dépôt d'une matière (28) pour réaliser un entrefer magnétique sur le pôle magnétique de fond (26) ; et
le dépôt d'un pôle magnétique supérieur (24) sur la matière (28) ; caractérisé par :
le placage sur le pôle magnétique supérieur (24) d'un masque métallique réactif (30) qui est différent d'un point de vue chimique du pôle magnétique supérieur (24) de sorte qu'il peut être attaqué de manière sélective ; dans lequel le pôle magnétique supérieur (24) et le masque réactif (30) sont déposés à travers un masque de photorésist (29).

2. Procédé selon la revendication 1, dans lequel l'étape de dépôt dudit masque réactif comprend le dépôt d'un élément ou de plusieurs éléments parmi Cu, Au, Zn, Sn, Cd, In, Pd, Os, Rh et Pt et des alliages de ces derniers.

3. Procédé selon la revendication 1 ou la revendication 2, comprenant le dépôt d'un masque réactif supplémentaire (32) sur le masque réactif (30).

4. Procédé selon la revendication 3, dans lequel l'étape de dépôt dudit masque réactif supplémentaire comprend le dépôt d'un élément ou de plusieurs éléments parmi Ni-Fe, Cu, Au, Zn, Sn, Cd, In, Pd, Os, Rh et Pt et des alliages de ces derniers.

5. Procédé selon la revendication 3, dans lequel le dépôt du masque réactif supplémentaire (32) comprend le dépôt d'un photorésist.

6. Procédé selon la revendication 5, comprenant la cuisson de la couche de photorésist pour induire une pente négative.

7. Procédé selon l'une quelconque des revendications précédentes, comprenant l'enlèvement du masque de photorésist (29) à la suite du dépôt du masque réactif (30) et/ou du masque réactif supplémentaire (32).

8. Procédé selon la revendication 7, comprenant l'étape d'enlèvement de parties du pôle magnétique de fond (26) non aligné avec le pôle supérieur (24) à la suite de l'enlèvement du masque de photorésist (29).

9. Procédé selon la revendication 8, dans lequel l'enlèvement de parties non alignées du pôle magnétique de fond (26) comprend un usinage par faisceau d'ions du pôle magnétique de fond (26).

10. Procédé selon la revendication 8 ou 9, comprenant l'attaque chimique, de manière sélective, du masque réactif (30) à la suite de l'enlèvement de parties non alignées du pôle magnétique de fond (26).
